# EUROPÄISCHE PATENTSCHRIFT

(11) **EP 3 246 187 B1**
(45) Veröffentlichungstag und Bekanntmachung des Hinweises auf die Patenterteilung: **12.11.2025**
(21) Anmeldenummer: 17170149.3
(22) Anmeldetag: 09.05.2017
(51) Int. Cl.: B60K 6/40, B60K 6/387, B60K 17/28, B60K 6/48

(54) **HYBRIDANTRIEB FÜR EIN KRAFTFAHRZEUG, INSBESONDERE FÜR EIN NUTZFAHRZEUG**
HYBRID DRIVE FOR A MOTOR VEHICLE, IN PARTICULAR FOR A COMMERCIAL VEHICLE
ENTRAÎNEMENT HYBRIDE DE VÉHICULE AUTOMOBILE, NOTAMMENT DE VÉHICULE UTILITAIRE

(30) Priorität: 19.05.2016 DE 102016006199
(43) Veröffentlichungstag der Anmeldung: 22.11.2017
(73) Patentinhaber: MAN Truck & Bus SE, 80995 München (DE)
(72) Erfinder: Müller, Anton, 82327 Tutzing (DE); von Esebeck, Götz, 15831 Blankenfelde-Mahlow (DE); Müller, Bernd, 80689 München (DE); Fissmann, Tobias, 80939 München (DE); Mayer, Florian, 83064 Raubling (DE); Braun, Reimar, 81735 München (DE)
(74) Vertreter: v. Bezold & Partner Patentanwälte - PartG mbB

(56) Entgegenhaltungen:
- EP-A2- 2 133 231
- WO-A1-2013/174825
- WO-A2-2015/019085
- DE-A1- 102011 102 265
- DE-A1- 102011 106 619
- DE-A1- 102013 019 901
- DE-U1- 9 312 143
- US-A1- 2007 267 233

## Beschreibung

Die Erfindung betrifft einen Hybridantrieb für ein Nutzfahrzeug (z. B. Lastkraftwagen, Omnibus).

Bei Nutzfahrzeugen (z. B. Lastkraftwagen, Omnibus) werden bekanntermaßen auch Hybridantriebe eingesetzt oder zumindest konzipiert, die zum Antrieb sowohl einen Verbrennungsmotor (z. B. Dieselmotor) als auch einen Elektromotor aufweisen. Der Elektromotor ist hierbei in der Regel kinematisch vor dem Schaltgetriebe des Verbrennungsmotors angeordnet, da an der Antriebsachse ein relativ großes Drehmoment benötigt wird. Derartige Elektromotoren für Nutzfahrzeuge werden jedoch nur in einer relativ geringen Stückzahl hergestellt und sind deshalb entsprechend teuer.

Andererseits sind aus dem Stand der Technik Sportwagen, Super-Sportwagen und Oberklasse-PKW mit rein elektrischen Antriebssystemen bekannt, die elektrische Antriebsleistungen aufweisen, die auch für Nutzfahrzeuge ausreichend groß sind. Die dabei verwendeten Elektromotoren werden mit einer wesentlich größeren Stückzahl hergestellt und sind deshalb wesentlich kostengünstiger als die bisher bei Nutzfahrzeugen eingesetzten Elektromotoren. Allerdings eignen sich diese Elektromotoren von Sportwagen bzw. Super-Sportwagen bisher nicht für eine Integration in einen Hybridantrieb eines Nutzfahrzeugs.

Das Dokument WO 2013/174825 A1 offenbart einen Antriebsstrang für ein Fahrzeug. Der Antriebsstrang umfasst ein Getriebesystem, das ein Fahrzeuggetriebe und eine Achsantriebseinheit umfasst. Der Antriebsstrang verfügt zusätzlich über ein System zur Rückgewinnung kinetischer Energie, das ein Energiespeichermittelumfasst, das ein Schwungrad umfasst. Das kinetische Energierückgewinnungssystem ist mit dem Getriebesystem zwischen dem Fahrzeuggetriebe und der Achsantriebseinheit wirkungsmäßig gekoppelt, um von diesem angetrieben zu werden und dieses anzutreiben. Komponenten des kinetischen Energierückgewinnungssystems können in einem Übertragungsgetriebe enthalten sein, das mit einem Ausgang des Fahrzeuggetriebes verbunden ist. Eine Kardanwelle kann das Übertragungsgetriebe mit dem Achsantrieb verbinden.

Zum technischen Hintergrund der Erfindung ist auch hinzuweisen auf DE 10 2011 102 265 A1 und US 2007/0267233 A1.

Schließlich offenbaren DE 10 2013 019 901 A1 und WO 2015/019085 A2 einen Hybridantrieb gemäß dem Oberbegriff von Anspruch 1. Hierbei ist ein Anpassgetriebe zwischen den Längsträgern des Leiterrahmens des Nutzfahrzeugs befestigt, so dass sich das Anpassgetriebe an den Längsträgern des Leiterrahmens abstützt. Diese Konstruktion ist jedoch mechanisch noch nicht optimal.

Der Erfindung liegt deshalb die Aufgabe zugrunde, einen verbesserten Hybridantrieb für ein Nutzfahrzeug zu schaffen.

Diese Aufgabe wird durch einen erfindungsgemäßen Hybridantrieb gemäß dem Hauptanspruch gelöst.

Der erfindungsgemäße Hybridantrieb umfasst zunächst eine Antriebsachse zum Antrieb eines Kraftfahrzeugs. Hierbei ist zu erwähnen, dass der erfindungsgemäße Hybridantrieb nicht auf eine einzige Antriebsachse beschränkt ist. Es ist vielmehr auch möglich, dass der Hybridantrieb mehrere Antriebsachsen antreibt.

Darüber hinaus weist der erfindungsgemäße Hybridantrieb in Übereinstimmung mit dem Stand der Technik einen Verbrennungsmotor (z. B. Dieselmotor) auf, um das Kraftfahrzeug an der Antriebsachse anzutreiben. Vorzugsweise handelt es bei dem Verbrennungsmotor um einen Dieselmotor. Es ist jedoch alternativ auch möglich, dass ein anderer Typ eines Verbrennungsmotors eingesetzt wird, wie beispielsweise ein Ottomotor.

Weiterhin umfasst der erfindungsgemäße Hybridantrieb in Übereinstimmung mit dem Stand der Technik ein Schaltgetriebe, das einen Kraftfluss von dem Verbrennungsmotor zu der Antriebsachse ermöglicht. Das Schaltgetriebe ermöglicht hierbei eine Änderung des Übersetzungsverhältnisses zwischen dem Verbrennungsmotor und der Antriebsachse. Beispielsweise kann es sich bei dem Schaltgetriebe um ein manuelles Schaltgetriebe handeln. Alternativ besteht jedoch auch die Möglichkeit, dass das Schaltgetriebe eine automatisierte Betätigung aufweist. Darüber hinaus kann es sich bei dem Schaltgetriebe auch um ein Wandler-Automatikgetriebe oder um ein stufenloses Getriebe handeln. Entscheidend ist lediglich, dass das Schaltgetriebe eine Änderung und Anpassung des Übersetzungsverhältnisses zwischen dem Verbrennungsmotor und der Antriebsachse ermöglicht.

Ferner umfasst der erfindungsgemäße Hybridantrieb in Übereinstimmung mit dem Stand der Technik einen Elektromotor, der ebenfalls einen Antrieb des Kraftfahrzeugs an der Antriebsachse ermöglicht.

Der erfindungsgemäße Hybridantrieb zeichnet sich nun gegenüber dem Stand der Technik dadurch aus, dass der Elektromotor kinematisch hinter dem Schaltgetriebe angeordnet ist, wohingegen der Elektromotor bei den üblichen Hybridantrieben für Nutzfahrzeuge kinematisch vor dem Schaltgetriebe angeordnet ist.

Diese Anordnung des Elektromotors kinematisch hinter dem Schaltgetriebe ist im Rahmen der Erfindung möglich, da vorzugsweise ein relativ starker Elektromotor eingesetzt wird, wie er beispielsweise von rein elektrisch angetriebenen Sportwagen bzw. Super-Sportwagen bekannt ist. So kann der Elektromotor beispielsweise eine Dauerleistung von mindestens 100 kW, 120 kW, 150 kW oder sogar mindestens 200 kW aufweisen. Die Spitzenleistung des Elektromotors beträgt dagegen vorzugsweise mindestens 250 kW, 300 kW oder sogar 320 kW. Weiterhin ist es zu erwähnen, dass der Elektromotor vorzugsweise eine Nenndrehzahl von mindestens 5.000 min⁻¹, 7.500 min⁻¹, 10.000 min⁻¹, 12.500 min⁻¹ oder sogar mindestens 15.000 min⁻¹ aufweist.

Weiterhin ist zu erwähnen, dass der Elektromotor vorzugsweise mit einer Spannungsklasse, insbesondere einer Zwischenkreisspannungsklasse, von 800 V betrieben wird. Ebenfalls möglich, aber weniger bevorzugt wäre eine Spannungsklasse von 400V. So weisen Bordnetze oftmals eine Zwischenkreisspannungsklasse von 800 V oder 400 V auf, die zum Antrieb des Elektromotor verwendet werden kann. Hierbei ist jedoch zu bemerken, dass der Schutz dieser Erfindungsvariante nicht beschränkt ist auf diese genannten Spannungsklassen.

Aufgrund der relativ großen Drehzahl des Elektromotors kann der Elektromotor in der Regel nicht direkt auf die Antriebsachse wirken. Erfindungsgemäß ist zwischen dem Schaltgetriebe und der Antriebsachse ein Anpassgetriebe angeordnet. Zum einen ermöglicht dieses Anpassgetriebe einen Kraftfluss von dem Verbrennungsmotor über das Schaltgetriebe und das Anpassgetriebe zu der Antriebsachse, wie es für einen herkömmlichen Antrieb mittels des Verbrennungsmotors erforderlich ist. Zum anderen ermöglicht das Anpassgetriebe aber auch einen Kraftfluss von dem Elektromotor über das Anpassgetriebe zu der Antriebsachse für einen elektrischen oder elektrisch unterstützten Fahrzeugantrieb. Weiterhin kann das Anpassgetriebe auch noch die Möglichkeit eines umgekehrten Kraftflusses von der Antriebsachse über das Anpassgetriebe zu dem Elektromotor bieten, was beispielsweise für einen Rekuperationsbetrieb wichtig ist, in dem der Elektromotor als Generator arbeitet. Das Anpassgetriebe bewirkt hierbei eine Übersetzung von der relativ großen Drehzahl des Elektromotors auf die relativ geringe Drehzahl der Antriebsachse. Schließlich kann das Anpassgetriebe auch einen Kraftfluss von dem Elektromotor über das Anpassgetriebe zu dem Verbrennungsmotor hin ermöglichen, um den Verbrennungsmotor durch den Elektromotor zu starten, wie noch eingehend beschrieben wird.

Das Anpassgetriebe ist über eine erste Gelenkwelle mit dem Schaltgetriebe und über eine zweite Gelenkwelle mit der Antriebsachse verbunden. Zwischen der zweiten Gelenkwelle und dem Anpassgetriebe ist eine trennbare Kupplung angeordnet, um das Anpassgetriebe von der Antriebsachse trennen zu können. Dies bietet den Vorteil, dass der Verbrennungsmotor durch den Elektromotor gestartet werden kann. Hierzu wird das Anpassgetriebe mittels der Kupplung von der Antriebsachse getrennt. Anschließend kann dann der Elektromotor gestartet werden, was einen Kraftfluss über das Anpassgetriebe und das Schaltgetriebe zu dem Verbrennungsmotor bewirkt, um den Verbrennungsmotor auf diese Weise zu starten. Hierbei besteht auch die Möglichkeit, dass der Kraftfluss von dem Elektromotor zu dem Verbrennungsmotor das Schaltgetriebe umgeht.

Weiterhin ist in einem Ausführungsbeispiel der Erfindung vorgesehen, dass ein Nebenaggregat (z. B. Kühlkompressor) an das Anpassgetriebe angeschlossen ist, um einen Kraftfluss von dem Verbrennungsmotor und/oder von dem Elektromotor über das Anpassgetriebe zu dem Nebenaggregat zu ermöglichen.

Weiterhin besteht im Rahmen der Erfindung die Möglichkeit, dass an das Anpassgetriebe ein Nebenabtrieb angeschlossen ist, der auch als Power- Take-Off (PTO) bezeichnet wird. Der Nebenabtrieb kann hierbei wahlweise von dem Verbrennungsmotor oder von dem Elektromotor über das Anpassgetriebe angetrieben werden.

Die mechanische Ankopplung des Nebenabtriebs an das Anpassgetriebe erfolgt vorzugsweise durch eine dritte Gelenkwelle, jedoch ist die Erfindung nicht auf diese Art der mechanischen Ankopplung des Nebenabtriebs beschränkt.

Es handelt sich bei dem Anpassgetriebe um ein Mehrganggetriebe und vorzugsweise um ein Zweiganggetriebe. Das Mehrganggetriebe ermöglicht hierbei eine Änderung des Übersetzungsverhältnisses von dem Elektromotor zu der Antriebsachse, damit der Elektromotor in verschiedenen Betriebszuständen befriedigend arbeiten kann.

Darüber hinaus weist das Anpassgetriebe vorzugsweise einen Leerlauf auf, so dass der Elektromotor im Leerlauf arbeiten kann, um mechanische Verluste durch den mitlaufenden Elektromotor zu vermeiden. Bei einem Antrieb des Fahrzeugs durch den Verbrennungsmotor allein wird das Anpassgetriebe dann vorzugsweise in den Leerlauf geschaltet, in dem der Elektromotor nicht mitläuft, wodurch mechanische Verluste durch den mitlaufenden Elektromotor vermieden werden.

In dem bevorzugten Ausführungsbeispiel der Erfindung ist das Anpassgetriebe an einem Querträger eines Leiterrahmens des Nutzfahrzeugs befestigt. Derartige Leiterrahmen mit Querträgern sind an sich aus dem Stand der Technik bekannt und müssen deshalb nicht näher beschrieben werden. Es ist an dieser Stelle lediglich zu erwähnen, dass das Anpassgetriebe vorzugsweise zwischen zwei Längsträgern des Leiterrahmens befestigt ist. Hierbei kann das Anpassgetriebe selbst ein Bestandteil eines Querträgers sein und damit selbst zur Versteifung des Leiterrahmens beitragen.

Schließlich ist zu erwähnen, dass die Erfindung nicht nur Schutz beansprucht für den vorstehend beschriebenen erfindungsgemäßen Hybridantrieb. Vielmehr beansprucht die Erfindung auch Schutz für ein Nutzfahrzeug mit einem derartigen Hybridantrieb, wie beispielsweise einen Lastkraftwagen (LKW) oder einen Omnibus.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine schematische Darstellung eines Nutzfahrzeugs mit einem Hybridantrieb,
- Figur 2: eine Abwandlung von Figur 1 mit einer zusätzlichen Kupplung zur Abtrennung der Antriebsachse,
- Figur 3: eine Abwandlung von Figur 1 mit einem zusätzlichen Nebenaggregat, das angetrieben wird, sowie
- Figur 4: eine Abwandlung von Figur 1 mit einem zusätzlichen Nebenabtrieb.

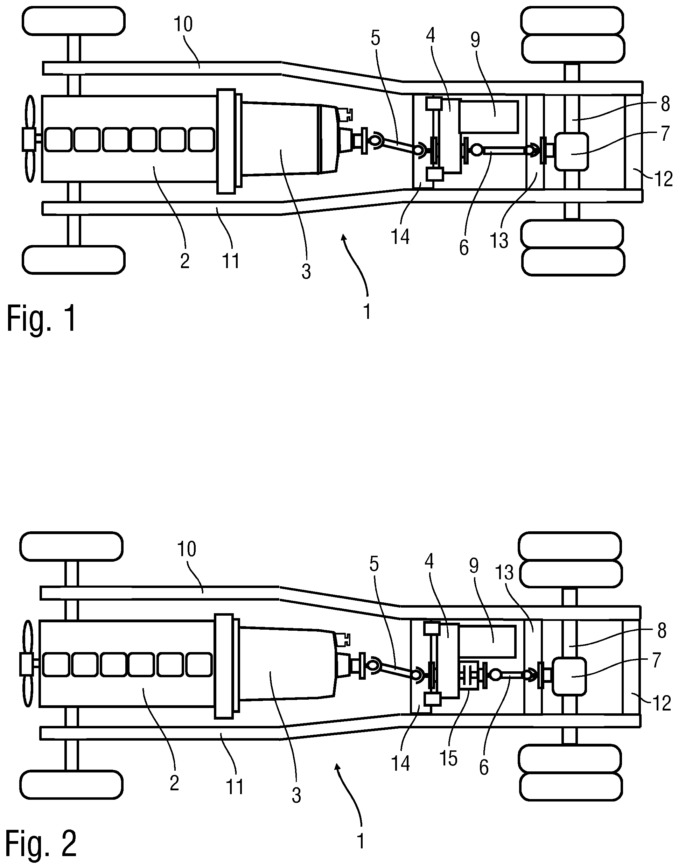

Figur 1 zeigt ein bevorzugtes Ausführungsbeispiel eines Nutzfahrzeugs 1 (z. B. Lastkraftwagen, Omnibus) mit einem Hybridantrieb.

Der Hybridantrieb weist als herkömmliches Antriebsaggregat zunächst einen Verbrennungsmotor 2 auf, wobei es sich in der Regel um einen Dieselmotor handelt.

Weiterhin umfasst der Hybridantrieb ein Schaltgetriebe 3, das an den Verbrennungsmotor 2 angeflanscht ist und von dem Verbrennungsmotor 2 angetrieben wird.

Kinematisch hinter dem Schaltgetriebe 3 befindet sich ein Anpassgetriebe 4, das über eine Gelenkwelle 5 mit dem Schaltgetriebe 3 verbunden ist.

Das Anpassgetriebe 4 ist andererseits über eine Gelenkwelle 6 mit einem Achsdifferenzial 7 einer Antriebsachse 8 verbunden.

Der Hybridantrieb ermöglicht also zunächst einen Kraftfluss von dem Verbrennungsmotor 2 über das Schaltgetriebe 3, die Gelenkwelle 5, das Anpassgetriebe 4, die Gelenkwelle 6 und das Achsgetriebe 7 zu der Antriebsachse 8.

Darüber hinaus weist der Hybridantrieb einen starken Elektromotor 9 auf, der mit dem Anpassgetriebe 4 gekoppelt ist und einen alternativen Antrieb des Nutzfahrzeugs 1 ermöglicht. So ermöglicht das Anpassgetriebe 4 einen Kraftfluss von dem Elektromotor 9 über das Anpassgetriebe 4, die Gelenkwelle 6 und das Achsdifferenzial 7 zu der Antriebsachse 8.

Zum einen ermöglicht der Hybridantrieb also einen herkömmlichen Antrieb allein durch den Verbrennungsmotor 2. In dieser Betriebsart wird das Anpassgetriebe 4 in einen Leerlauf geschaltet, damit der Elektromotor 9 nicht mitlaufen muss. Dadurch wird verhindert, dass bei einem Antrieb nur durch den Verbrennungsmotor 2 der mitlaufende Elektromotor 9 Verluste verursacht.

Zum anderen ermöglicht der Hybridantrieb aber auch einen rein elektromotorischen Fahrbetrieb, indem das Nutzfahrzeug 1 alleine durch den Elektromotor 9 angetrieben wird.

Weiterhin ermöglicht der Hybridantrieb einen kombinierten Antrieb sowohl durch den Verbrennungsmotor 2 als auch durch den Elektromotor 9. Hierbei handelt es sich um eine besonders vorteilhafte Betriebsart, weil die größten Einsparungen an Gefällstrecken oder bei Steigungen erreicht werden können. So kann die Antriebsunterstützung durch den Elektromotor 9 an Steigungen den Vorteil bieten, dass das Schaltgetriebe 3 nicht aus dem Direktgang zurückschalten muss. Bei Gefällstrecken kann der Elektromotor 9 dagegen im Rekuperationsbetrieb arbeiten, d. h. der Elektromotor 9 arbeitet dann als Generator und wird zum Auffüllen von elektrischen Batterien eingesetzt. Darüber hinaus unterstützt der Elektromotor 9 dann auch als Betriebsbremse den Bremsvorgang.

Weiterhin ist aus der Zeichnung ersichtlich, dass das Nutzfahrzeug einen herkömmlichen Leiterrahmen mit zwei Längsträgern 10, 11 und mehreren Querträgern 12, 13, 14 aufweist. Das Anpassgetriebe 4 ist hierbei an dem Querträger 14 zwischen den beiden Längsträgern 10, 11 befestigt.

Figur 2 zeigt eine Abwandlung des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Gelenkwelle 6 über eine zusätzliche Kupplung 15 mit dem Anpassgetriebe 4 verbunden ist. Die Kupplung 15 ermöglicht ein Abtrennen der Antriebsachse 8 von dem Hybridantrieb. Dies bietet die Möglichkeit, dass der Elektromotor 9 dann im Verbrennungsmotor 2 startet. Hierbei erfolgt dann ein Kraftfluss von dem Elektromotor 9 über das Anpassgetriebe 4, die Gelenkwelle 5, das Schaltgetriebe 3 zu dem Verbrennungsmotor 2.

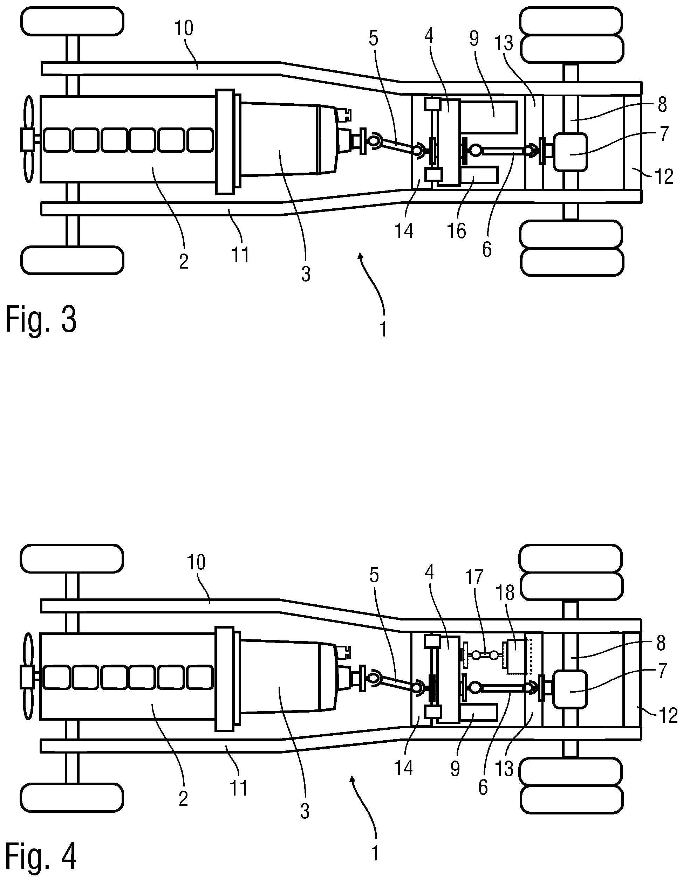

Figur 3 zeigt eine weitere Abwandlung des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass an das Anpassgetriebe 4 zusätzlich ein Nebenaggregat 16 angeschlossen ist, wobei es sich beispielsweise um einen Kühlkompressor handeln kann. Das Nebenaggregat 16 kann dann wahlweise von dem Elektromotor 9 oder von dem Verbrennungsmotor 2 angetrieben werden.

Schließlich zeigt Figur 4 eine weitere Abwandlung des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass an das Anpassgetriebe 4 über eine weitere Gelenkwelle 17 ein Nebenabtrieb 18 angeschlossen ist, der auch als Power-Take-Off (PTO) bezeichnet wird.

### Bezugszeichenliste

- 1: Nutzfahrzeug
- 2: Verbrennungsmotor
- 3: Schaltgetriebe
- 4: Anpassgetriebe
- 5: Gelenkwelle
- 6: Gelenkwelle
- 7: Achsdifferenzial
- 8: Antriebsachse
- 9: Elektromotor
- 10, 11: Längsträger des Leiterrahmens
- 12-14: Querträger des Leiterrahmens
- 15: Kupplung
- 16: Nebenaggregat
- 17: Gelenkwelle
- 18: Nebenabtrieb

## Patentansprüche

1. Hybridantrieb für ein Nutzfahrzeug, insbesondere für einen Lastkraftwagen oder einen Omnibus, mit
a) einer Antriebsachse (8),
b) einem Verbrennungsmotor (2), insbesondere einem Dieselmotor, zum Antrieb des Kraftfahrzeugs an der Antriebsachse (8),
c) einem Schaltgetriebe (3) zwischen dem Verbrennungsmotor (2) und der Antriebsachse (8),
d) einem Elektromotor (9) zum Antrieb des Kraftfahrzeugs an der Antriebsachse (8), wobei der Elektromotor (9) kinematisch hinter dem Schaltgetriebe (3) angeordnet ist,
e) einem Anpassgetriebe (4), wobei
e1) das Anpassgetriebe (4) kinematisch zwischen dem Schaltgetriebe (3) und der Antriebsachse (8) angeordnet ist,
e2) das Anpassgetriebe (4) einen Kraftfluss von dem Verbrennungsmotor (2) über das Schaltgetriebe (3) und das Anpassgetriebe (4) zu der Antriebsachse (8) ermöglicht,
e3) der Elektromotor (9) mit dem Anpassgetriebe (4) verbunden ist, und
e4) das Anpassgetriebe (4) einen Kraftfluss ermöglicht von dem Elektromotor (9) über das Anpassgetriebe (4) zu der Antriebsachse (8) für einen elektrischen Fahrzeugantrieb, und/oder von der Antriebsachse (8) über das Anpassgetriebe (4) zu dem Elektromotor (9) für einen Rekuperationsbetrieb, in dem der Elektromotor (9) als Generator arbeitet,
f) einer ersten Gelenkwelle (5), die das Schaltgetriebe (3) mit dem Anpassgetriebe (4) verbindet, und
g) einer zweiten Gelenkwelle (6), die das Anpassgetriebe (4) mit der Antriebsachse (8) verbindet,
**gekennzeichnet durch**
h) eine Kupplung (15) zwischen der zweiten Gelenkwelle (6) und dem Anpassgetriebe (4), um das Anpassgetriebe (4) von der Antriebsachse (8) trennen zu können, damit der Verbrennungsmotor (2) **durch** den Elektromotor (9) gestartet werden kann, wobei das Anpassgetriebe (4) ein Mehrganggetriebe ist, insbesondere eine Zweiganggetriebe, um das Übersetzungsverhältnis von dem Elektromotor (9) zu der Antriebsachse (8) ändern zu können.

2. Hybridantrieb nach Anspruch 1, **dadurch gekennzeichnet,**
a) **dass** der Elektromotor (9) eine Dauerleistung von mindestens 100 kW, 120 kW, 150 kW oder mindestens 200 kW aufweist, und/oder
b) **dass** der Elektromotor (9) eine Spitzenleistung von mindestens 250 kW, 300 kW oder 320 kW aufweist, und/oder
c) **dass** der Elektromotor (9) eine Nenndrehzahl von mindestens 5.000 min⁻¹, 7.500 min⁻¹, 10.000 min⁻¹, 12.500 min⁻¹ oder 15.000 min⁻¹ aufweist, und/oder
d) **dass** die elektrische Maschine für die Nutzung einer Spannungsklasse von 400 V oder von 800 V, insbesondere einer Zwischenkreisspannungsklasse bis 800 V, ausgelegt ist.

3. Hybridantrieb nach einem der vorhergehenden Ansprüche, **gekennzeichnet durch** ein Nebenaggregat (16), das an das Anpassgetriebe (4) angeschlossen ist, um einen Kraftfluss von dem Verbrennungsmotor (2) und/oder von dem Elektromotor (9) über das Anpassgetriebe (4) zu dem Nebenaggregat (16) zu ermöglichen.

4. Hybridantrieb nach einem der vorhergehenden Ansprüche, **gekennzeichnet durch** einen Nebenabtrieb (18), der an das Anpassgetriebe (4) angeschlossen ist, um einen Kraftfluss von dem Verbrennungsmotor (2) und/oder von dem Elektromotor (9) über das Anpassgetriebe (4) zu dem Nebenabtrieb (18) zu ermöglichen.

5. Hybridantrieb nach Anspruch 4, **gekennzeichnet durch** eine dritte Gelenkwelle (17), die das Anpassgetriebe (4) mit dem Nebenabtrieb (18) verbindet.

6. Hybridantrieb nach einem der vorhergehenden Ansprüche, **dadurch gekennzeichnet, dass** das Anpassgetriebe (4) einen Leerlauf des Elektromotors (9) ermöglicht, um mechanische Verluste durch den mitlaufenden Elektromotor (9) zu vermeiden.

7. Hybridantrieb nach einem der vorhergehenden Ansprüche, **dadurch gekennzeichnet,**
a) **dass** das Anpassgetriebe (4) an einem Querträger (14) eines Leiterrahmens (10-14) des Nutzfahrzeugs befestigt ist, und/oder
b) **dass** das Anpassgetriebe (4) zwischen zwei Längsträgern (10, 11) des Leiterrahmens (10-14) des Nutzfahrzeugs befestigt ist, und/oder
c) **dass** das Anpassgetriebe (4) einen Querträger (14) bildet und damit zur Versteifung des Leiterrahmens (10, 14) beiträgt.

8. Nutzfahrzeug, insbesondere Lastkraftwagen oder Omnibus, mit einem Hybridantrieb nach einem der vorhergehenden Ansprüche.

## Claims

1. Hybrid drive for a utility vehicle, in particular for a truck or a bus, with
a) a drive axle (8),
b) an internal combustion engine (2), in particular a diesel engine, for driving the motor vehicle on the drive axle (8),
c) a manual transmission (3) between the internal combustion engine (2) and the drive axle (8),
d) an electric motor (9) for driving the motor vehicle on the drive axle (8), wherein the electric motor (9) is kinematically arranged behind the manual transmission (3),
e) an adaptation gearbox (4), wherein
e1) the adaptation gearbox (4) is arranged kinematically between the manual transmission (3) and the drive axle (8),
e2) the adaptation gearbox (4) enables a flow of power from the internal combustion engine (2) via the manual transmission (3) and the adaptation gearbox (4) to the drive axle (8),
e3) the electric motor (9) is connected to the adaptation gearbox (4), and
e4) the adaptation gearbox (4) enables a flow of power from the electric motor (9) via the adaptation gearbox (4) to the drive axle (8) for electric vehicle drive, and/or from the drive axle (8) via the adaptation gearbox (4) to the electric motor (9) for a recuperation mode in which the electric motor (9) operates as a generator,
f) a first drive shaft (5) connecting the manual transmission (3) to the adaptation gearbox (4), and
g) a second drive shaft (6) connecting the adaptation gearbox (4) to the drive axle (8), **characterized by**
h) a clutch (15) between the second drive shaft (6) and the adaptation gearbox (4) in order to be able to separate the adaptation gearbox (4) from the drive axle (8) so that the internal combustion engine (2) can be started by the electric motor (9), wherein the adaptation gearbox (4) being a multi-speed gearbox, in particular a two-speed gearbox, in order to be able to change the transmission ratio from the electric motor (9) to the drive axle (8).

2. Hybrid drive according to claim 1, **characterized in that**
a) the electric motor (9) comprises a continuous power output of at least 100 kW, 120 kW, 150 kW, or at least 200 kW, and/or
b) the electric motor (9) comprises a peak power output of at least 250 kW, 300 kW, or 320 kW, and/or
c) the electric motor (9) comprises a nominal speed of at least 5,000 min⁻¹, 7,500 min⁻¹, 10,000 min⁻¹, 12,500 min⁻¹, or 15,000 min⁻¹, comprises, and/or
d) the electric machine is designed for use with a voltage class of 400 V or 800 V, in particular an intermediate circuit voltage class of up to 800 V.

3. Hybrid drive according to one of the preceding claims, **characterized by** an auxiliary unit (16) connected to the adaptation gearbox (4) in order to enable a power flow from the internal combustion engine (2) and/or from the electric motor (9) via the adaptation gearbox (4) to the auxiliary unit (16).

4. Hybrid drive according to one of the preceding claims, **characterized by** an auxiliary output (18) connected to the adaptation gearbox (4) to enable power to flow from the internal combustion engine (2) and/or the electric motor (9) via the adaptation gearbox (4) to the auxiliary output (18).

5. Hybrid drive according to claim 4, **characterized by** a third drive shaft (17) connecting the adaptation gearbox (4) to the auxiliary drive (18).

6. Hybrid drive according to one of the preceding claims, **characterized in that** the adaptation gearbox (4) enables the electric motor (9) to idle in order to avoid mechanical losses caused by the electric motor (9) running.

7. Hybrid drive according to one of the preceding claims, **characterized in that**
a) the adaptation gearbox (4) is attached to a cross member (14) of a ladder frame (10-14) of the utility vehicle, and/or
b) the adaptation gearbox (4) is attached between two longitudinal members (10, 11) of the ladder frame (10-14) of the utility vehicle, and/or
c) the adaptation gearbox (4) forms a cross member (14) and thus contributes to stiffening the ladder frame (10, 14).

8. Utility vehicle, in particular a truck or bus, with a hybrid drive according to one of the preceding claims.

## Revendications

1. Propulsion hybride pour un véhicule utilitaire, en particulier pour un camion ou un omnibus, présentant
a) un essieu moteur (8),
b) un moteur à combustion interne (2), en particulier un moteur diesel, pour la propulsion du véhicule automobile au niveau de l'essieu moteur (8),
c) une boîte de vitesses (3) entre le moteur à combustion interne (2) et l'essieu moteur (8),
d) un moteur électrique (9) pour la propulsion du véhicule automobile au niveau de l'essieu moteur (8), le moteur électrique (9) étant agencé, d'un point de vue cinématique, en aval de la boîte de vitesses (3),
e) une boîte de transfert (4),
e1) la boîte de transfert (4) étant agencée, d'un point de vue cinématique, entre la boîte de vitesses (3) et l'essieu moteur (8),
e2) la boîte de transfert (4) permettant un flux d'énergie à partir du moteur à combustion interne (2) par l'intermédiaire de la boîte de vitesses (3) et la boîte de transfert (4) vers l'essieu moteur (8),
e3) le moteur électrique (9) étant relié à la boîte de transfert (4) et
e4) la boîte de transfert (4) permettant un flux d'énergie à partir du moteur électrique (9) par l'intermédiaire de la boîte de transfert (4) vers l'essieu moteur (8) pour une propulsion électrique de véhicule et/ou à partir de l'essieu moteur (8) par l'intermédiaire de la boîte de transfert (4) vers le moteur électrique (9) pour un fonctionnement en récupération dans lequel le moteur électrique (9) travaille comme générateur,
f) un premier arbre de transmission (5), qui relie la boîte de vitesses (3) à la boîte de transfert (4) et
g) un deuxième arbre de transmission (6), qui relie la boîte de transfert (4) à l'essieu moteur (8), **caractérisée par**
h) un embrayage (15) entre le deuxième arbre de transmission (6) et la boîte de transfert (4), destiné à pouvoir séparer la boîte de transfert (4) de l'essieu moteur (8) afin que le moteur à combustion interne (2) puisse être démarré par le moteur électrique (9), la boîte de transfert (4) étant une transmission à plusieurs rapports, en particulier une transmission à deux rapports, destinée à pouvoir modifier le rapport de transmission du moteur électrique (9) à l'essieu moteur (8).

2. Propulsion hybride selon la revendication 1, **caractérisée en ce que**
a) **en ce que** le moteur électrique (9) présente une puissance constante d'au moins 100 kW, 120 kW, 150 kW ou d'au moins 200 kW et/ou
b) **en ce que** le moteur électrique (9) présente une puissance de pointe d'au moins 250 kW, 300 kW ou d'au moins 320 kW et/ou
c) **en ce que** le moteur électrique (9) présente un régime nominal d'au moins 5000 min⁻¹, 7500 min⁻¹, 10 000 min⁻¹, 12 500 min⁻¹ ou 15 000 min⁻¹ et/ou
d) **en ce que** le moteur électrique est conçu pour l'utilisation d'une classe de tension de 400 V ou de 800 V, en particulier d'une classe de tension de circuit intermédiaire jusqu'à 800 V.

3. Propulsion hybride selon l'une des revendications précédentes, **caractérisée par** un groupe auxiliaire (16) qui est raccordé à la boîte de transfert (4) afin de permettre un flux d'énergie à partir du moteur à combustion interne (2) et/ou du moteur électrique (9) par l'intermédiaire de la boîte de transfert (4) vers le groupe auxiliaire (16).

4. Propulsion hybride selon l'une des revendications précédentes, **caractérisée par** une prise de force (18) qui est raccordée à la boîte de transfert (4) afin de permettre un flux d'énergie à partir du moteur à combustion interne (2) et/ou du moteur électrique (9) par l'intermédiaire de la boîte de transfert (4) vers la prise de force (18).

5. Propulsion hybride selon la revendication 4, **caractérisée par** un troisième arbre de transmission (17) qui relie la boîte de transfert (4) à la prise de force (18).

6. Propulsion hybride selon l'une des revendications précédentes, **caractérisée en ce que** la boîte de transfert (4) permet au moteur électrique (9) de tourner à vide afin d'éviter des pertes mécaniques provoquées par le moteur électrique (9) qui tourne en même temps.

7. Propulsion hybride selon l'une quelconque des revendications précédentes, **caractérisée**
a) **en ce que** la boîte de transfert (4) est fixée à une traverse (14) d'un châssis à longerons (10-14) du véhicule utilitaire et/ou
b) **en ce que** la boîte de transfert (4) est fixée entre deux longerons (10, 11) du châssis à longerons (10-14) du véhicule utilitaire et/ou
c) **en ce que** la boîte de transfert (4) forme une traverse (14) et contribue ainsi au renforcement du châssis à longerons (10, 14).

8. Véhicule utilitaire, en particulier camion ou omnibus, présentant une propulsion hybride selon l'une des revendications précédentes.
